# EUROPÄISCHE PATENTSCHRIFT

(11) **EP 1 279 465 B1**
(45) Veröffentlichungstag und Bekanntmachung des Hinweises auf die Patenterteilung: **12.09.2007**
(21) Anmeldenummer: 02016172.5
(22) Anmeldetag: 20.07.2002
(51) Int. Cl.: B23Q 17/22, B27M 1/08, B23Q 1/00

(54) **Kehlmaschine sowie Verfahren zur Einstellung wenigstens einer der Spindeln der Kehlmaschine**
Moulding machine and method for positioning at least one spindle of the mould
Moulurière et procédé de positionnement d'au moins une broche de la moulurière

(30) Priorität: 27.07.2001 DE 10136767
(43) Veröffentlichungstag der Anmeldung: 29.01.2003
(73) Patentinhaber: Michael Weinig Aktiengesellschaft, D-97941 Tauberbischofsheim (DE)
(72) Erfinder: Englert, Heinrich, 97922 Lauda-Königshofen (DE)
(74) Vertreter: Kohl, Karl-Heinz

(56) Entgegenhaltungen:
- EP-A- 0 600 174
- EP-A- 0 620 081
- EP-A- 0 645 221
- EP-A- 0 917 935
- DE-A- 19 756 503

## Beschreibung

Die Erfindung betrifft eine Kehlmaschine nach dem Oberbegriff des Anspruches 1 sowie ein Verfahren zur Einstellung wenigstens einer der Spindeln einer solchen Kehlmaschine nach dem Oberbegriff des Anspruches 10.

In Kehlmaschinen werden die Werkstücke bei ihrem Durchlauf an mehreren Seiten mit auf den Spindeln sitzenden Werkzeugen bearbeitet. Die Spindeln müssen auf die Abmessungen des Werkstückes sowie auf das an diesem Werkstück herzustellende Profil eingestellt werden. Es ist bekannt, die Profildaten sowie die gemessenen Werkzeugdaten in einem Speicher abzulegen. Aus diesen abgelegten Profil- und Werkzeugdaten werden durch ein Programm die Einstellwerte für die Spindeln zur Erzeugung des gewünschten Profils errechnet.

Der Erfindung liegt die Aufgabe zugrunde, die gattungsgemäße Kehlmaschine und das gattungsgemäße Verfahren so auszubilden, daß die zur Einstellung der Spindel vorgesehene Einstelleinrichtung einfach und preiswert ist.

Diese Aufgabe wird bei der gattungsgemäßen Kehlmaschine erfindungsgemäß mit den kennzeichnenden Merkmalen des Anspruches 1 und beim gattungsgemäßen Verfahren erfindungsgemäß mit den kennzeichnenden Merkmalen des Anspruches 10 gelöst.

Bei der erfindungsgemäßen Kehlmaschine wird die Spindel relativ zum maschinenseitigen Bezugspunkt in eine vorgegebene Lage eingestellt. Der zugehörige Positionswert wird im Anzeigegerät angezeigt. Im Datenspeicher wird der Positionswert der Spindel als Istwert abgelegt. Soll die Spindel erneut in diese Position eingestellt werden, wird der abgelegte Istwert aus dem Datenspeicher abgerufen und am Anzeigegerät wieder angezeigt. Die Bedienungsperson der erfindungsgemäßen Kehlmaschine muß dann gemäß dem erfindungsgemäßen Verfahren die Spindel nur noch so verstellen, daß der am Anzeigegerät angegebene Istwert mit dem abgerufenen und am Anzeigegerät ebenfalls dargestellten Sollwert übereinstimmt. Hierbei ist ein Programm, aus dem die Einstelldaten ermittelt werden müssen, nicht erforderlich. Darum kann die erfindungsgemäße Kehlmaschine kostengünstig hergestellt werden. Das Anzeigegerät kann auch so ausgebildet sein, daß beim Abrufen des Sollwertes aus dem Datenspeicher der Differenzwert zur augenblicklichen Istposition der Spindel angezeigt wird. Der Bediener der erfindungsgemäßen Kehlmaschine muß in diesem Falle die Spindel so verstellen, daß der angezeigte Differenzwert auf Null gebracht wird.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in perspektivischer Darstellung eine erfindungsgemäße Kehlmaschine,
- Fig. 2: in schematischer Darstellung eine Einstelleinrichtung der Kehlmaschine gemäß Fig. 1,
- Fig. 3 und Fig. 4: den Einstellvorgang einer Spindel der erfindungsgemäßen Kehlmaschine für unterschiedliche Werkstücke,
- Fig. 5 und Fig. 6: das Einstellen der Spindel nach einem abgerufenen Sollwert.

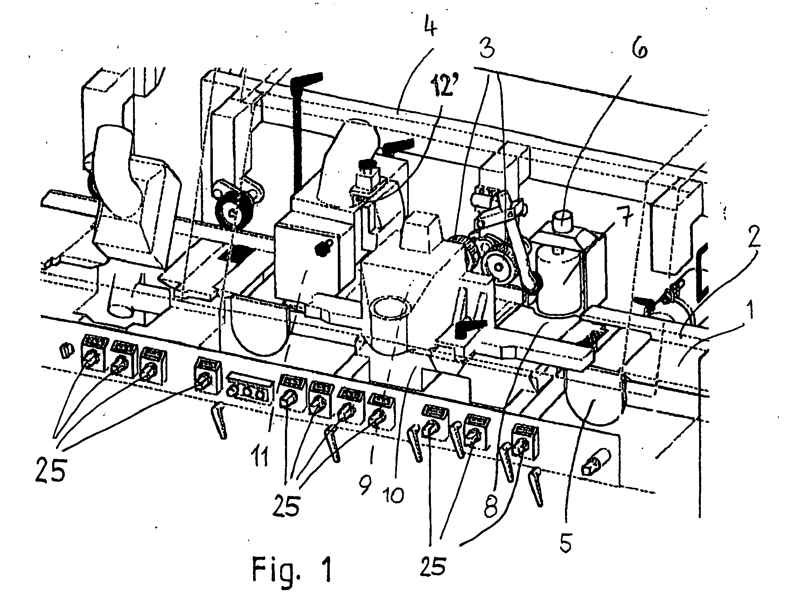

Die Kehlmaschine dient zur Bearbeitung von Werkstücken aus Holz, Kunststoff und dergleichen, die zur Bearbeitung an ihren Seiten durch die Kehlmaschine in bekannter Weise transportiert werden. Die Kehlmaschine hat eine Transportbahn 1, auf der die (nicht dargestellten) Werkstücke transportiert werden. Während ihres Transportes durch die Kehlmaschine liegen diese Werkstücke an einem Anschlag 2 an, der sich über die Länge der Kehlmaschine erstreckt und im Bereich von seitlichen Spindeln unterbrochen ist. Die Werkstücke werden in Fig. 1 von rechts nach links auf der Transportbahn 1 transportiert. Zum Transport der Werkstücke sind Transportwalzen 3 vorgesehen, die auf dem Werkstück aufliegen und drehbar angetrieben sind. Die Transportwalzen 3 sind hängend an einem Transportbalken 4 gelagert, der sich mit Abstand oberhalb der Transportbahn 1 befindet.

Die Werkstücke werden bei ihrem Durchgang durch die Kehlmaschine zunächst mit einem Werkzeug 5 bearbeitet, das auf einer im Bereich unterhalb der Transportbahn 1 befindlichen horizontalen Abrichtspindel sitzt. Mit diesem Werkzeug 5 wird die Unterseite des Werkstückes bearbeitet, insbesondere gehobelt. Die Transportbahn 1 weist für den Durchtritt des Werkzeuges 5 eine entsprechende Öffnung auf.

In Transportrichtung mit Abstand hinter der unteren Abrichtspindel ist die Kehlmaschine mit einer vertikalen Spindel 6 versehen, auf der ein Werkzeug 7 sitzt, mit dem die in Transportrichtung rechte Seite der Werkstücke bearbeitet wird. Die Spindel 6 sitzt auf einem Querschieber 8, der sich vorzugsweise senkrecht zur Transportrichtung der Werkstücke durch die Kehlmaschine erstreckt. Mit dem Querschieber 8 kann das Werkzeug 7 quer, vorzugsweise senkrecht zur Transportrichtung verschoben werden.

In Transportrichtung hinter dem Werkzeug 7 befindet sich ein Werkzeug 9, das sich auf der in Transportrichtung linken Seite der zu bearbeitenden Werkstücke befindet. Dieses Werkzeug 9 sitzt drehfest auf einer vertikalen Spindel. Das Werkzeug 9 zusammen mit der Spindel ist auf einem Querschieber 10 gelagert, der quer, vorzugsweise senkrecht zur Transportrichtung der Werkstücke verschoben werden kann. Die beiden Querschlitten 8, 10 liegen mit Abstand voneinander. Die Oberseiten der Querschieber 8, 10 liegen vorteilhaft in einer Ebene mit der Oberseite der Transportbahn 1, so daß die Werkstücke beim Übergang von der Transportbahn 1 auf die Querschieber 8, 10 störungsfrei gefördert werden können. Die Oberseiten der Querschieber 8, 10 können aber auch tiefer liegen. Dann bilden in diesem Bereich separate Tischplatten die Transportbahn 1.

Mit Abstand hinter dem Werkzeug 9 befindet sich ein Werkzeug 11, das drehfest auf einer horizontalen Spindel sitzt, die im Bereich oberhalb der Transportbahn 1 und der Werkstücke angeordnet ist. Mit dem Werkzeug 11 wird die Oberseite des Werkstückes bearbeitet, beispielsweise gerade gehobelt. Die Kehlmaschine kann weitere nachfolgende Werkzeuge haben, wie zum Beispiel weitere untere Spindeln.

Auf der Kehlmaschine lassen sich die unterschiedlichsten Bearbeitungen der Werkstücke in einfacher Weise durchführen. Sind die Werkzeuge 5, 7, 9, 11 entsprechend Fig. 1 eingestellt, dann werden die Werkstücke, die längs des in Transportrichtung sich erstreckenden Anschlaglineals 2 transportiert werden, zunächst mit dem Werkzeug 5 an ihrer Unterseite geradgehobelt. Anschließend wird mit dem Werkzeug 7 die in Transportrichtung rechts liegende Längsseite des Werkstückes geradgehobelt. Mit dem in Transportrichtung linken Werkzeug 9 wird die in Transportrichtung liegende linke Längsseite des Werkstückes geradgehobelt und damit die fertige Werkstückbreite bestimmt. Mit dem nachfolgenden Werkzeug 11 wird schließlich die Oberseite des Werkstückes geradgehobelt und damit die Dicke des fertigen Werkstückes bestimmt.

Die Werkzeuge 5, 7, 9, 11 können auch Profilwerkzeuge sein, d.h. sie tragen Profilmesser, welche die gewünschte Profilgebung haben. Damit werden die entsprechenden Seiten des Werkstückes profiliert. Es ist auch möglich, je nach Anwendungsfall auf den einen Spindeln Hobelwerkzeuge und auf anderen Spindeln Profilwerkzeuge anzuordnen, so daß die entsprechenden Seiten des Werkstückes geradgehobelt oder profiliert werden.

Nach dem Durchgang durch die Kehlmaschine sind die Werkstücke an ihren Seiten bearbeitet worden. Die Werkstücke werden mit geringem Abstand hintereinander an den verschiedenen Werkzeugen 5, 7, 9, 11 vorbeigeführt, welche die entsprechenden Bearbeitungen an den Werkstücken vornehmen.

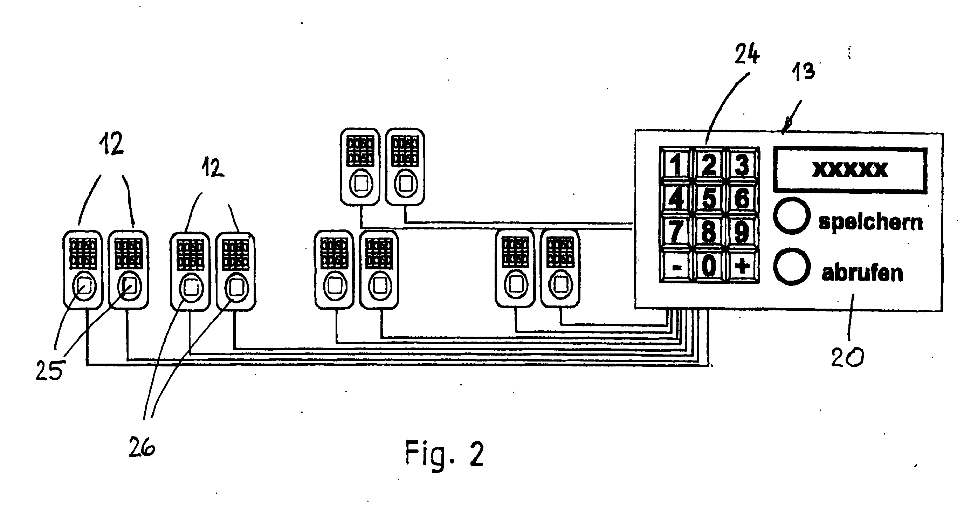

Je nach Werkstück und herzustellendem Profil müssen die die Werkzeuge 5, 7, 9, 11 tragenden Spindeln in bekannter Weise eingestellt werden. Hierfür ist die Kehlmaschine mit einer Einstelleinrichtung versehen, die für die verschiedenen Achsverstellungen Anzeigegeräte 12 aufweist (Fig. 2). Sämtliche Anzeigegeräte 12 sind an einen Datenspeicher 13 angeschlossen, in dem in noch zu beschreibender Weise die Istmaße aller Spindeln 12 unter einer bestimmten Programmnummer oder einem Programm- oder Profilnamen abgelegt werden. Soll die Kehlmaschine erneut für das entsprechende Werkstückprofil eingestellt werden, so werden die Einstelldaten, die unter der entsprechenden Programmnummer oder dem entsprechenden Programm- oder Profilnamen im Speicher 13 abgelegt sind, aufgerufen und an die einzelnen Anzeigegeräte 12 übermittelt.

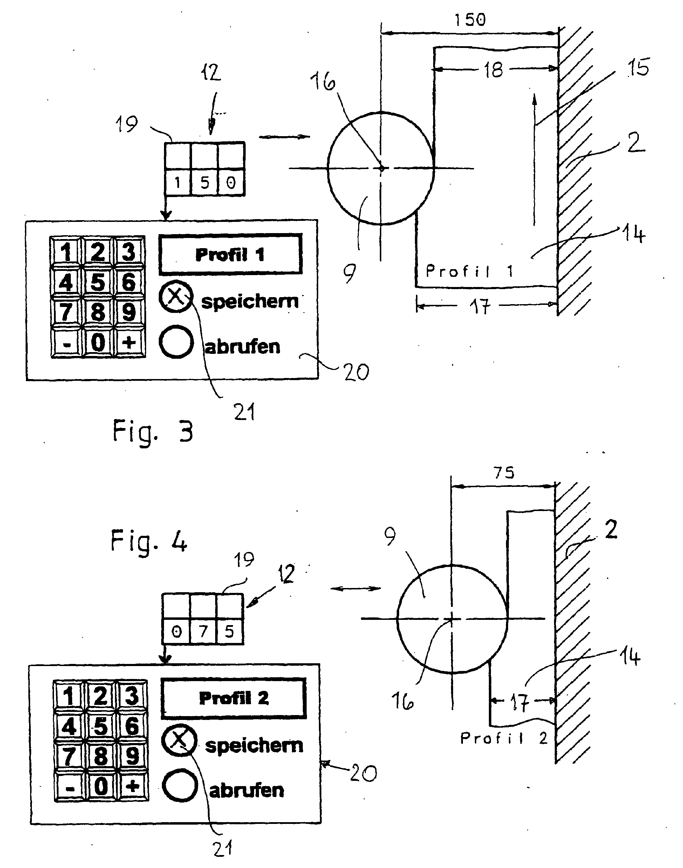

Anhand der Fig. 3 bis 6 soll das Einstellverfahren mit Hilfe der Einstelleinrichtung beispielhaft bei der Einstellung einer Spindel erläutert werden.

Fig. 3 zeigt das zu bearbeitende Werkstück 14, das längs des Anschlaglineals 2 in Transportrichtung 15 durch die Kehlmaschine transportiert wird. Das Werkstück 14 soll mit dem Werkzeug 9, das auf der Spindel 16 drehfest sitzt, an seiner in Transportrichtung 15 linken Seite bearbeitet werden. Die Spindel 16 wird hierbei so in bezug auf das Anschlaglineal 2 eingestellt, daß sie den Abstand 150 mm vom Anschlaglineal 2 hat. Das Werkstück 14 hat vor der Bearbeitung durch das Werkzeug 9 das Breitenmaß 17. Nach der Bearbeitung durch das Werkzeug 9 hat das Werkstück 14 nur noch das kleinere Breitenmaß 18. Das der Spindel 16 zugeordnete Anzeigegerät 12 sitzt auf der entsprechenden Stellspindel 25 für die Werkzeugspindel 16 und hat ein Display 19, in dem der Abstand der Spindel 16 vom Anschlaglineal 2 vorzugsweise elektronisch angezeigt wird. Im beschriebenen Ausführungsbeispiel erscheint im Display 19 der Wert 150. Das Anzeigegerät 12 ist in bekannter Weise über eine Hülse 26 mit der Stellspindel 25 antriebsverbunden und ermittelt über die Drehbewegung der Stellspindel 25 unter Berücksichtigung der Spindelsteigung zum Beispiel nach dem Prinzip eines Drehgebers den Abstand der Maschinenspindel 9 vom Anschlaglineal 2, der im Display 19 zur Anzeige gebracht wird.

Auf diese Weise werden sämtliche Spindeln der Kehlmaschine in die zur Herstellung des Profils am Werkstück 14 erforderliche Lage gebracht. Die Einstellungen werden unter einer Programmnummer, einem Programm- oder Profilnamen in einer definierten Reihenfolge im Datenspeicher 13 abgelegt. Im Ausführungsbeispiel werden die Daten unter dem Namen "Profil 1" abgelegt. An einem Eingabegerät 20, das mit einer alphanumerischen Tastatur 24 versehen ist, wird hierzu die Speichertaste 21 gedrückt.

Fig. 4 zeigt den Fall, daß mit dem Werkzeug 9 auf der Spindel 16 ein neues Werkstück 14 mit einem Profil 2 mit einer geringeren Breite 17 als beim Ausführungsbeispiel nach Fig. 3 bearbeitet werden soll. In diesem Falle wird die Spindel 16 so verstellt, daß sie beispielsweise den Abstand 75 mm vom Anschlaglineal 2 der Kehlmaschine hat. Dieses eingestellte Maß erscheint im Display 19 des Anzeigegerätes 12. Sämtliche Spindeln der Kehlmaschine werden auf das neue Werkstück 14 mit dem Profil 2 mit dem Breitenmaß 17 eingestellt, wobei die entsprechenden Positionen der jeweiligen Spindeln der Kehlmaschine im Display 19 des jeweiligen Anzeigegerätes 12 erscheinen. Sobald sämtliche Spindeln der Kehlmaschine auf dieses neue Werkstück eingestellt sind, werden durch Drücken der Speichertaste 21 des Eingabegerätes 20 die Einstellungen der verschiedenen Spindeln in der definierten Reihenfolge an den Datenspeicher 13 übermittelt und im Ausführungsbeispiel unter dem Namen "Profil 2" abgelegt.

Sämtliche Positionen der Spindeln der Kehlmaschine werden auf diese Weise als Istwerte, bezogen auf ein bestimmtes Profil des Werkstückes 14, im Datenspeicher 13 abgelegt.

In gleicher Weise werden vorteilhaft auch die Positionsdaten von Andruckelementen erfaßt und im Datenspeicher 13 abgelegt. Die Andruckelemente sind in bekannter Weise vor und hinter dem auf der entsprechenden Spindel sitzenden Werkzeug angeordnet und liegen auf dem Werkstück 14 auf. Die Andruckelemente werden relativ zum Werkzeug eingestellt, um eine optimale Andruckwirkung auf das Werkstück 14 auszuüben. Den Andruckelementen sind vorteilhaft ebenfalls Anzeigegeräte 12 zugeordnet, mit denen in gleicher Weise wie bei den Spindeln die Position der Andruckelemente erfaßt wird. Eines dieser Anzeigegeräte 12' ist in Fig. 1 erkennbar, mit dem die Position des einen, der oberen horizontalen Spindel zugeordneten (nicht dargestellten) Andruckelementes erfaßt wird. Dieses Anzeigegerät 12' ist ebenfalls an den Datenspeicher 13 angeschlossen.

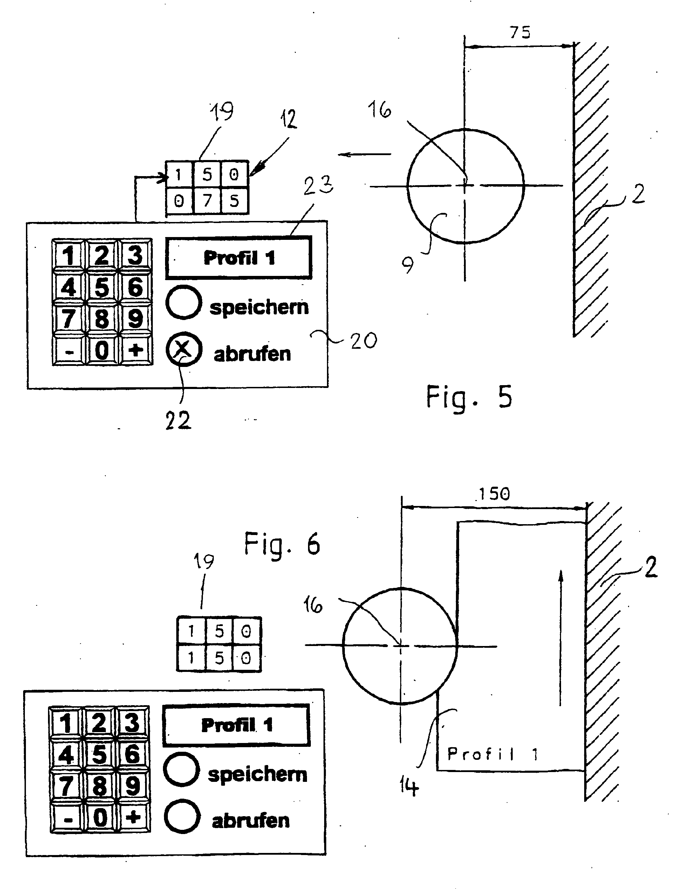

Die Fig. 5 und 6 zeigen den Fall, daß aus dem Datenspeicher 13 die Einstelldaten für die Spindeln der Kehlmaschine abgerufen werden sollen, um am Werkstück 14 das Profil 1 herzustellen. Beispielhaft ist dargestellt, daß im unteren Feld des Displays 19 des entsprechenden Anzeigegerätes der Wert 75 angezeigt wird, aus dem sich ergibt, daß die Spindel 16 für das Werkzeug 9 in einem Abstand von 75 mm vom Anschlaglineal 2 der Kehlmaschine angeordnet ist. Um die Daten für das Profil 1 aus dem Datenspeicher 13 an die jeweiligen Anzeigegeräte 12 zu übermitteln, wird am Eingabegerät 20 zunächst der Name "Profil 1" in einem Display 23 des Eingabegerätes 20 eingestellt und anschließend die Abruftaste 22 gedrückt. Dadurch werden die unter der Bezeichnung "Profil 1" im Datenspeicher 13 abgelegten Einstelldaten in der definierten Reihenfolge an die jeweiligen Anzeigegeräte 12 übermittelt und im oberen Feld des Displays 19 angezeigt. Wie anhand von Fig. 3 beschrieben worden ist, ist die Spindel 16 bei der Herstellung des Profils 1 in einem Abstand von 150 mm zum Anschlaglineal 2 angeordnet. Dementsprechend wird im oberen Anzeigefeld des Displays 19 des zugehörigen Anzeigegerätes 12 dieser Wert angezeigt. Im unteren Anzeigefeld des Displays 19 ist noch der augenblickliche Wert für den Abstand der Spindel 16 vom Anschlaglineal 2 angegeben, der im Ausführungsbeispiel 75 mm beträgt. Der Bediener der Kehlmaschine muß nunmehr die Spindel 16 so weit verstellen, bis im unteren Anzeigefeld des Displays 19 der Wert 150 erscheint (Fig. 6). Dann hat die Spindel 16 den Abstand von 150 mm vom Anschlaglineal 2.

Gleichzeitig werden auf diese Weise auch an die jeweiligen Spindeln die unter der Bezeichnung "Profil 1" abgelegten Einstelldaten an die jeweiligen Anzeigegeräte 12 übermittelt. Der Bediener der Kehlmaschine muß dann nur noch dafür sorgen, daß in den beiden Anzeigefeldern der jeweiligen Anzeigegeräte dieselben Werte angegeben sind.

In gleicher Weise werden auch an die den Andruckelementen zugeordneten Anzeigegeräte 12' die entsprechenden Daten aus dem Datenspeicher 13 übermittelt. Weicht der Sollwert vom Istwert ab, wird das entsprechende Andruckelement so verstellt, daß der angezeigte Istwert mit dem Sollwert übereinstimmt.

Um zu überprüfen, ob die Einstellungen der Kehlmaschine richtig sind, erfolgt ein Probedurchlauf eines Werkstückes. Sollte sich beispielsweise der Flugkreisdurchmesser des Werkzeuges 9 in der Zeit zwischen dem Abspeichern der Einstelldaten und dem erneuten Abrufen geändert haben, beispielsweise durch Nachschleifen der Schneidmesser, kann nach dem Probedurchlauf die erforderliche Nachstellung der jeweiligen Spindel ermittelt und vorgenommen werden. Die neuen Istdaten werden dann, wie anhand der Fig. 3 und 4 erläutert worden ist, durch Drücken der Speichertaste 21 des Eingabegerätes 20 und der entsprechenden Bezeichnung in den Speicher 13 übertragen.

Die Kehlmaschine läßt sich in der beschriebenen Weise unter Einsatz der Einstelleinrichtung mit sehr geringem Aufwand und einfach auf das herzustellende Werkstückprofil einstellen. Die im Datenspeicher 13 abgelegten Einstelldaten sind bei der Erfassung Istdaten, die nach dem Abrufen aus dem Speicher als Solldaten im Display 19 des jeweiligen Anzeigegerätes 12 angezeigt werden. Der Bediener der Kehlmaschine muß lediglich die jeweilige Spindel so einstellen, daß die Istlage der Spindel mit der vom Datenspeicher 13 abgerufenen Sollage übereinstimmt. Im Display mit den beiden Anzeigefeldern kann dies sehr einfach überwacht werden. Stimmt das am Werkstück 14 nach dessen Probedurchlauf durch die Kehlmaschine hergestellte Profil nicht mit dem Sollprofil überein, weil zum Beispiel die Werkzeuge nachgeschliffen worden sind, wird die Einstellung der Spindeln entsprechend korrigiert. Die neuen Einstellmaße werden dann wiederum in der beschriebenen Weise an den Datenspeicher als Istmaße übermittelt.

Wird die Datenspeicherung nicht genutzt, läßt sich die Kehlmaschine mit den mechanischen Anzeigegeräten in üblicher Weise nach ermittelten Einstell- und Werkzeugdaten oder auch nach einem Holzmuster einstellen.

Da die jeweilige Spindel sowohl in ihrer Längsrichtung als auch quer zu ihrer Längsrichtung in der Kehlmaschine verstellt werden kann, sind im Ausführungsbeispiel für jede Spindel zwei Anzeigegeräte 12 vorgesehen.

Im dargestellten und beschriebenen Ausführungsbeispiel hat das Anzeigegerät 12, 12' das Display 19 mit den beiden Anzeigefeldern, in denen der Ist- und der Sollwert angezeigt werden. Das Anzeigegerät 12, 12' kann auch so ausgebildet sein, daß beim Abrufen der Sollwerte aus dem Datenspeicher 13 im Display 19 nur der Differenzwert zur augenblicklichen Istposition angezeigt wird. Der Bediener der Kehlmaschine muß dann die Verstellung so vornehmen, daß der Differenzwert auf Null gebracht wird.

Es sind in der Kehlmaschine noch weitere verstellbare Elemente, wie Anschläge, Lineale, Tischplatten und dergleichen, vorhanden, die von Hand in bezug auf die Werkzeuge bzw. Werkstücke eingestellt werden müssen. Um das beschriebene Verfahren auch für diese Elemente einsetzen zu können, werden sie mit einem Linearmeßsystem, wie Linearpotentiometer oder Magnetband, versehen, welche mit einem entsprechenden Anzeigegerät gekoppelt sind, das in der beschriebenen Weise den Ist- und Sollwert bzw. den Differenzwert anzeigt. Die Einstellung dieser Elemente ist somit ebenfalls einfach möglich.

Es ist auch möglich, daß das Anzeigegerät 12, 12' in seinem Display 19 nur den Ist- oder den Sollwert anzeigt. Mit einem (nicht dargestellten) Schalter kann zwischen den beiden angezeigten Werten umgeschaltet werden. Auch dann lassen sich die verschiedenen Spindeln und einstellbaren Elemente einfach und zuverlässig in die erforderliche Position verstellen.

Bei einer vorteilhaften Ausbildung des Verfahrens werden im Display 19 des Anzeigegerätes 12, 12' zur Einstellung der Elemente auf eine neue Position der Ist- und der Sollwert angezeigt. Wenn beide Werte übereinstimmen, wird im Display 19 nur noch der Istwert angezeigt, der dem Sollwert entspricht. Wird das entsprechende Element aus der eingestellten Position verstellt, um beispielsweise eine Nachkorrektur vorzunehmen oder weil das Element unbeabsichtigt verstellt worden ist, wird der Bediener optisch auf diese Verstellung hingewiesen. Der Bediener weiß dann, daß der Ist- und der Sollwert nicht übereinstimmen. Dies kann beispielsweise durch eine blinkende Darstellung des im Display 19 angezeigten Wertes, durch eine Änderung des Farbtons des Wertes, durch ein zusätzlich im Display erscheinendes Symbol oder dergleichen erfolgen. Der Bediener schaltet das Anzeigegerät in einem solchen Fall um, so daß im Display 19 wieder der Ist- und der Sollwert angezeigt werden. Der Bediener kann dann das Element so nachstellen, daß Ist- und Sollwert wieder übereinstimmen. Diese Nachstellung ist insbesondere dann notwendig, wenn das Element unbeabsichtigt verstellt worden ist.

Ist allerdings die Verstellung des Elementes zur Nachkorrektur notwendig gewesen, weil beispielsweise die Messer eines Werkzeuges nachgeschliffen worden sind, wird die neue Istposition in der beschriebenen Weise als neuer Sollwert im Speicher 13 abgelegt.

## Patentansprüche

1. Kehlmaschine zur Bearbeitung von Werkstücken (14) aus Holz, Kunststoff und dergleichen, mit wenigstens einer Transportbahn (1) für die Werkstücke und mit Werkzeugen (5, 7, 9, 11), die drehfest auf Spindeln (6, 16) sitzen, die einstellbar und mit Stellelementen (25), vorzugsweise Stellspindeln, antriebsverbunden sind,
**dadurch gekennzeichnet, daß** die Stellelemente (25) mit die Position der Spindeln (6, 16) relativ zu einem maschinenseitigen Bezugspunkt (2) anzeigenden Anzeigegeräten (12) gekoppelt sind, die an wenigstens einen Datenspeicher (13) angeschlossen sind, in dem die Positionsdaten der Spindeln (6, 16) als Istwert für das herzustellende Profil unter einem diesem Profil zugeordneten Namen ablegbar und aus diesem für eine erneute Einstellung dieses Profils als Sollwert abrufbar sind.

2. Kehlmaschine nach Anspruch 1,
**dadurch gekennzeichnet, daß** die Anzeigegeräte (12) auf den Stellelementen drehfest sitzen.

3. Kehlmaschine nach Anspruch 1 oder 2,
**dadurch gekennzeichnet, daß** das Anzeigegerät (12) wenigstens ein, vorteilhaft zwei Anzeigefenster aufweisendes Display (19) aufweist.

4. Kehlmaschine nach einem der Ansprüche 1 bis 3,
**dadurch gekennzeichnet, daß** der Datenspeicher (13) wenigstens ein vorteilhaft wenigstens ein Display (23) aufweisendes Eingabegerät (20) aufweist.

5. Kehlmaschine nach Anspruch 4,
**dadurch gekennzeichnet, daß** das Eingabegerät (20) mit einer alphanumerischen Tastatur (24) versehen ist.

6. Kehlmaschine nach einem der Ansprüche 1 bis 5,
**dadurch gekennzeichnet, daß** zumindest eine der Spindeln (6, 16) quer zur Transportrichtung der Werkstücke (14) einstellbar ist.

7. Kehlmaschine nach Anspruch 6,
**dadurch gekennzeichnet, daß** die vorteilhaft auf einem Querschieber (8, 10) vorgesehene Spindel (6, 16) quer zu ihrer Achse einstellbar ist.

8. Kehlmaschine nach Anspruch 6 oder 7,
**dadurch gekennzeichnet, daß** die Spindel (6, 16) in ihrer Achsrichtung einstellbar ist.

9. Kehlmaschine nach einem der Ansprüche 1 bis 8, die mit Andruckelementen versehen ist, die relativ zur zugehörigen Spindel einstellbar sind,
**dadurch gekennzeichnet, daß** zum Einstellen wenigstens eines Andruckelementes mindestens ein Anzeigegerät (12') vorgesehen ist, das an den Datenspeicher (13) angeschlossen ist.

10. Verfahren zur Einstellung wenigstens einer der Spindeln (6, 16) einer Kehlmaschine nach einem der Ansprüche 1 bis 9, bei dem die Spindel (6, 16) relativ zu einem maschinenseitigen Bezugspunkt (2) eingestellt wird,
**dadurch gekennzeichnet, daß** die Spindel (6, 16) in eine gewünschte Lage in bezug auf den maschinenseitigen Bezugspunkt (2) eingestellt und die Positionsdaten der Spindel (6, 16) als Istwert für das herzustellende Profil unter einem diesem Profil zugeordneten Namen in einem Datenspeicher (13) abgelegt wird, aus dem der abgelegte Istwert für eine erneute Einstellung dieses Profils zur Einstellung der Spindel (6, 16) als Sollwert abgerufen wird.

11. Verfahren nach Anspruch 10,
**dadurch gekennzeichnet, daß** der Sollwert in einem Display (19) eines Anzeigegerätes (12) angezeigt und die Spindel (6, 16) aus ihrer jeweiligen Lage so verstellt wird, daß der im Display (19) angezeigte Istwert mit dem Sollwert übereinstimmt.

12. Verfahren nach Anspruch 10 oder 11,
**dadurch gekennzeichnet, daß** die Spindel (6, 16) in eine auf das an einem Werkstück (14) herzustellende Profil notwendige Lage eingestellt und der zugehörige Istwert unter einem diesem Profil zugeordneten Namen im Datenspeicher (13) abgelegt wird.

13. Verfahren nach einem der Ansprüche 10 bis 12,
**dadurch gekennzeichnet, daß** sämtliche Spindeln (6, 16) der Kehlmaschine in eine gewünschte Lage relativ zum maschinenseitigen Bezugspunkt (2) eingestellt werden und daß der jeweilige Istwert der Spindeln (6, 16) im Datenspeicher (13) abgelegt wird.

14. Verfahren nach Anspruch 10,
**dadurch gekennzeichnet, daß** der Sollwert im Display (19) des Anzeigegerätes (12) als Differenzwert zum augenblicklichen Istwert der Spindel (6, 16) angezeigt und die Spindel (6, 16) so verstellt wird, daß der Differenzwert den Wert Null erreicht.

15. Verfahren nach einem der Ansprüche 10 bis 14,
**dadurch gekennzeichnet, daß** wenigstens ein Andruckelement in eine gewünschte Lage in bezug auf das zugehörige Werkzeug (5, 7, 9) eingestellt und der dieser Lage entsprechende Istwert im Datenspeicher (13) abgelegt wird, aus dem der abgelegte Istwert für eine erneute Einstellung des Andruckelementes in die gleiche Lage als Sollwert abgerufen wird.

## Claims

1. Moulding machine for working workpieces (14) of wood, plastic and the like, having at least one conveying path (1) for the workpieces and having tools (5, 7, 9, 11) which are seated in a rotationally fixed manner on spindles (6, 16) which are adjustable and drivingly connected to adjusting elements (25), preferably adjusting spindles, **characterised in that** the adjusting elements (25) are coupled to display devices (12) which display the position of the spindles (6, 16) relative to a machine-side reference point (2) and are connected to at least one data memory (13), in which the position data of the spindles (6, 16) can be stored, as an actual value for the profile to be produced, under a name assigned to this profile and from which they can be retrieved as a desired value for resetting this profile.

2. Moulding machine according to Claim 1, **characterised in that** the display devices (12) are seated in a rotationally fixed manner on the adjusting elements.

3. Moulding machine according to Claim 1 or 2, **characterised in that** the display device (12) has at least one display (19), advantageously having two display windows.

4. Moulding machine according to one of Claims 1 to 3, **characterised in that** the data memory (13) has at least one input device (20), advantageously having at least one display (23).

5. Moulding machine according to Claim 4, **characterised in that** the input device (20) is provided with an alphanumeric keypad (24).

6. Moulding machine according to one of Claims 1 to 5, **characterised in that** at least one of the spindles (6, 16) is adjustable transversely to the conveying direction of the workpieces (14).

7. Moulding machine according to Claim 6, **characterised in that** the spindle (6, 16), advantageously provided on a transverse slide (8, 10), is adjustable transversely to the spindle axis.

8. Moulding machine according to Claim 6 or 7, **characterised in that** the spindle (6, 16) is adjustable in its axial direction.

9. Moulding machine according to one of Claims 1 to 8, which is provided with pressing elements adjustable relative to the associated spindle, **characterised in that** at least one display device (12') connected to the data memory (13) is provided for adjusting at least one pressing element.

10. Method for adjusting at least one of the spindles (6, 16) of a moulding machine according to one of Claims 1 to 9, in which the spindle (6, 16) is adjusted relative to a machine-side reference point (2), **characterised in that** the spindle (6, 16) is adjusted to a desired position in relation to the machine-side reference point (2) and the position data of the spindle (6, 16) are stored, as an actual value for the profile to be produced, under a name assigned to this profile, in a data memory (13), from which the stored actual value is retrieved as a desired value for adjusting the spindle (6, 16) for resetting this profile.

11. Method according to Claim 10, **characterised in that** the desired value is displayed on a display (19) of a display device (12) and the spindle (6, 16) is adjusted from its respective position such that the actual value displayed on the display (19) coincides with the desired value.

12. Method according to Claim 10 or 11, **characterised in that** the spindle (6, 16) is adjusted to a position required for the profile to be produced on a workpiece (14) and the associated actual value is stored in the data memory (13) under a name assigned to this profile.

13. Method according to one of Claims 10 to 12, **characterised in that** all of the spindles (6, 16) of the moulding machine are adjusted to a desired position relative to the machine-side reference point (2), and **in that** the respective actual value of the spindles (6, 16) is stored in the data memory (13).

14. Method according to Claim 10, **characterised in that** the desired value is displayed on the display (19) of the display device (12) as a differential value relative to the current actual value of the spindle (6, 16), and the spindle (6, 16) is adjusted such that the differential value becomes zero.

15. Method according to one of Claims 10 to 14, **characterised in that** at least one pressing element is adjusted to a desired position in relation to the associated tool (5, 7, 9) and the actual value corresponding to this position is stored in the data memory (13), from which the stored actual value is retrieved as a desired value for resetting the pressing element to the same position.

## Revendications

1. Moulurière pour l'usinage de pièces à usiner (14) en bois, plastique ou analogues, équipée d'au moins une bande transporteuse (1) pour les pièces à usiner et d'outils (5, 7, 9, 11), qui sont montés à rotation sur les broches (6, 16), qui peuvent être positionnées et reliées en entraînement par des éléments d'ajustement (25), de préférence des broches de réglage,
**caractérisée en ce que** les éléments d'ajustement (25) sont couplés à des dispositifs d'affichage (12) affichant la position des broches (6, 16) par rapport à un point de référence (2) côté machine, qui sont reliés à au moins une mémoire de données (13), dans laquelle les données de position des broches (6, 16) peuvent être stockées comme valeur effective pour le profil à fabriquer sous un nom associé à ce profil et peuvent être extraites de celle-ci comme valeur de consigne pour un nouveau positionnement de ce profil.

2. Moulurière selon la revendication 1, **caractérisée en ce que** les dispositifs d'affichage (12) sont montés à rotation sur les éléments d'ajustement.

3. Moulurière selon la revendication 1 ou 2, **caractérisée en ce que** le dispositif d'affichage (12) présente au moins un affichage (19) présentant avantageusement deux fenêtres d'affichage.

4. Moulurière selon l'une des revendications 1 à 3, **caractérisée en ce que** la mémoire de données (13) présente au moins un périphérique d'entrée (20) présentant avantageusement au moins un affichage (23).

5. Moulurière selon la revendication 4, **caractérisée en ce que** le périphérique d'entrée (20) est équipé d'un clavier alphanumérique (24).

6. Moulurière selon l'une des revendications 1 à 5, **caractérisée en ce qu'**au moins une des broches (6, 16) est positionnée transversalement à la direction de transport des pièces à usiner (14).

7. Moulurière selon la revendication 6, **caractérisée en ce que** la broche (6, 16) prévue avantageusement sur une coulisse transversale (8, 10) peut être positionnée transversalement à son axe.

8. Moulurière selon la revendication 6 ou 7, **caractérisée en ce que** la broche (6, 16) peut être positionnée dans sa direction axiale.

9. Moulurière selon l'une des revendications 1 à 8, qui est équipée d'éléments presseurs, qui peuvent être positionnés par rapport à la broche associée, **caractérisée en ce que**, en vue du positionnement d'au moins un élément presseur, au moins un dispositif d'affichage (12') est prévu, qui est relié à la mémoire de données (13).

10. Procédé de positionnement d'au moins une des broches (6, 16) d'une moulurière selon l'une des revendications 1 à 9, dans lequel la broche (6, 16) est positionnée par rapport à un point de référence (2) côté machine,
**caractérisé en ce que** la broche (6, 16) est positionnée dans une position désirée par rapport au point de référence (2) côté machine et les données de position de la broche (6, 16) sont stockées comme valeur effective pour le profil à fabriquer sous un nom associé à ce profil dans une mémoire de données (13), à partir de laquelle la valeur effective stockée est extraite comme valeur de consigne pour un nouveau positionnement de ce profil en vue du positionnement de la broche (6, 16).

11. Procédé selon la revendication 10, **caractérisé en ce que** la valeur de consigne est affichée sur un affichage (19) d'un dispositif d'affichage (12) et la broche (6, 16) est déplacée de sa position respective de sorte que la valeur effective affichée sur l'affichage (19) correspond à la valeur de consigne.

12. Procédé selon la revendication 10 ou 11, **caractérisé en ce que** la broche (6, 16) est positionnée dans une position nécessaire pour le profil à fabriquer à partir d'une pièce à usiner (14) et la valeur effective associée est stockée dans la mémoire de données (13) sous un nom associé à ce profil.

13. Procédé selon l'une des revendications 10 à 12, **caractérisé en ce que** toutes les broches (6, 16) de la moulurière sont positionnées dans une position désirée par rapport au point de référence (2) côté machine et **en ce que** la valeur effective respective des broches (6, 16) est stockée dans la mémoire de données (13).

14. Procédé selon la revendication 10, **caractérisé en ce que** la valeur de consigne est affichée sur l'affichage (19) du dispositif d'affichage (12) comme valeur différentielle par rapport à la valeur effective instantanée de la broche (6, 16) et la broche (6, 16) est déplacée de sorte que la valeur différentielle atteint la valeur zéro.

15. Procédé selon l'une des revendications 10 à 14, **caractérisé en ce qu'**au moins un élément presseur est positionné dans une position désirée par rapport à l'outil associé (5, 7, 9) et la valeur effective correspondant à cette position est stockée dans la mémoire de données (13), à partir de laquelle la valeur effective stockée est extraite comme valeur de consigne pour un nouveau positionnement de l'élément presseur dans la même position.
